# EUROPEAN PATENT APPLICATION

(11) **EP 4 715 215 A1**
(43) Date of publication of application: **25.03.2026**
(21) Application number: 23939828.2
(22) Date of filing: 02.06.2023
(51) Int. Cl.: F04D 17/12, F04D 29/057, F04D 29/42, F04D 29/053, F04D 29/28

(54) **TURBO COMPRESSOR**

(71) Applicant: LG Electronics Inc., Yeongdeungpo-gu Seoul 07336 (KR)
(72) Inventor: OH, Junchul, Seoul 08592 (KR); MOON, Changgook, Seoul 08592 (KR); LEE, Byeongchul, Seoul 08592 (KR); YI, Howon, Seoul 08592 (KR)
(74) Representative: Vossius & Partner Patentanwälte Rechtsanwälte mbB
(86) International application number: PCT/KR2023/007625
(87) International publication number: WO 2024/248188

(57) **Abstract**

Disclosed is a turbo compressor. In the turbo compressor, a radial bearing is composed of a gas foil bearing including a bump foil, and a thermal deformation member made of a different material than the bump foil may be in close contact with one side of the bump foil. Accordingly, as the bearing gap between the radial bearing and a rotary shaft is actively varied in accordance with the operation speed of the rotary shaft, the radial direction of the rotary shaft can be more stably supported than by increasing the rigidity of the bump foil.

## Description

### Technical Field

The disclosure relates to a turbo compressor including a radial bearing.

### Background Art

In general, compressors are widely used through overall home appliances or industries, and are apparatuses that receive power transferred from a power generation apparatus such as an electric motor or a turbine to compress air, refrigerant or various other working gages.

A turbo compressor is included in the compressors. The turbo compressor allows a centrifugal force to operate by rotating a vane wheel (hereinafter, referred to as an impeller) at high speed, so that a working gas is compressed while converting a portion of velocity energy into pressure energy.

For example, the turbo compressor may be used in a chiller system that supplies cold water to a source of demand. In the chiller system, the cold water is refrigerated through heat exchange between a refrigerant circulated in a refrigerant cycle and the cold water circulated in the source of demand.

Patent Document 1 (Korean Registered Patent Publication No. 10-1746896) discloses a turbo compressor in which a rotary shaft is supported in an axial direction and/or a radial direction. In the turbo compressor, a retaining ring surrounding the rotary shaft is arranged, thereby preventing a shaft from being separated in damage of an impeller and facilitating disassembly and assembly.

However, in Patent Document 1, an increase in number of components and an increase in manufacturing cost due thereto are caused as components including the retaining ring, a retaining ring housing, and the like are added, and there is a problem that it is difficult to align the retaining ring and the shaft in assembly of the retaining ring.

Patent Document 2 (Korean Registered Patent Publication No. 10-2265256) discloses a radial bearing supporting a rotary shaft in a radial direction. In the radial bearing, a double foil method of increasing radial load bearing power during a high temperature/high speed operation.

However, in Patent Document, as a bump foil forming a portion of a gas foil bearing is formed into double bump foils, processing may be difficult, and the double bum foils should be assembled between one housing (e.g., a bearing shell) and a top foil. Hence, an assembly operation is difficult to that extent, and therefore, manufacturing cost may increase. In addition, load bearing power is excessively generated during a low speed operation, and therefore, motor loss may be increased.

### Disclosure of Invention

### Technical Problem

Therefore, to obviate those problems, an aspect of the detailed description is to provide a turbo compressor capable of effectively supporting a radial load of a rotary shaft.

Another aspect of the detailed description is to provide a turbo compressor in which radial bearing power can be varied according to a size of a radial load.

Still another aspect of the detailed description is to provide a turbo compressor capable of minimizing shaking of a rotary shaft by reducing a gap between the rotary shaft and a bearing during a high temperature/high speed operation and reducing motor loss due to an excessive increase in load bearing power during a low speed/low temperature operation.

Still another aspect of the detailed description is to provide a turbo compressor in which the assembly and assembly reliability of a radial bearing supporting a radial load of a rotary shaft can be improved.

### Solution to Problem

To achieve these and other advantages and in accordance with the purpose of the disclosure, as embodied and broadly described herein, there is provided a turbo compressor including a housing, a rotary shaft, an impeller, a bearing shell, and a radial bearing. The rotary shaft may be rotatably arranged inside the housing. The impeller may be coupled to the rotary shaft to rotate. The bearing shell may be arranged on one axial side of the impeller and may have the rotary shaft passing therethrough in an axial direction. The radial bearing may be arranged on an inner circumferential surface of the bearing shell and may include a bump foil to rotatably and elastically support a radial direction of the rotary shaft. The radial bearing may include a thermal deformation member made of a material different from that of the bump foil to be adhered closely to the bump foil. Accordingly, as the bearing gap between the radial bearing and the rotary shaft is actively varied according to an operation speed of the rotary shaft, the radial direction of the rotary shaft can be more stably supported as compared with that the rigidity of the bump foil is increased.

In an example, the thermal deformation member may be made of a material having a thermal expansion coefficient higher than that of the bump foil. Accordingly, the height of the bump foil is increased by the thermal deformation member in a high-temperature/high-speed operation condition, so that the bearing gap can be reduced.

For example, the thermal deformation member may be arranged one the opposite side of the rotary shaft with the bump foil interposed therebetween. Accordingly, the thermal deformation member quickly thermally deforms the bump foil toward the rotary shaft in the high-temperature/high speed operation condition, thereby quickly reducing the bearing gap.

In another example, the thermal deformation member may be formed in the same shape as the bump foil. Accordingly, the bump foil including the thermal deformation member can be easily formed.

In still another example, a thickness of the thermal deformation member may be formed larger than or equal to a thickness of the bump foil. Accordingly, the surface area of the thermal deformation member is widely secured, thereby quickly varying the bump foil according to a rotational speed of the rotary shaft.

In still another example, the thermal deformation material may be formed to have the same thickness along a circumferential direction. Accordingly, the thermal deformation member is thermally deformed equally along the circumferential direction, thereby stably supporting the rotary shaft.

In still another example, the bump foil may include a plurality of foil curved portions protruding toward the rotary shaft and a foil connection portion connecting the plurality of foil curved portions to each other. The thermal deformation member may include a plurality of thermal deformation curved portions adhered closely to the foil curved portions to protrude toward the rotary shaft and a thermal deformation connection portion adhered closely to the foil connection portion to connect the plurality of thermal deformation curved portions to each other. A thickness of the thermal deformation curved portion may be formed larger than or equal to a thickness of the thermal deformation connection portion. Accordingly, the bearing gap between the radial bearing and the rotary shaft is further reduced, so that the radial direction of the rotary shaft can be stably supported in the high-temperature/high-speed operation condition.

For example, the thickness of the thermal deformation curved portion may be formed thicker as approaching a center of the circumferential direction. Accordingly, as a central portion of the bump foil is considerably deformed, the bearing gap is more quickly reduced, so that the radial direction of the rotary shaft can be more stably supported in the high-temperature/high-speed operation condition.

In still another example, a deformation restricting portion restricting an elastic deformation range of the radial bearing may be arranged on one axial side of the radial bearing. Accordingly, although the rotary shaft receives a load in the radial direction, distortion of the rotary shaft can be restricted in the radial direction by the deformation restricting portion.

For example, a foil support ring supporting the radial bearing in the axial direction may be arranged on the other axial side of the radial bearing. A height of the deformation restricting portion may be formed smaller than a height of the bump foil and may be formed larger than or equal to a height of the foil support ring. Accordingly, the deformation range of the bump foil constituting the radial bearing is restricted, so that damage due to over-deformation of the radial bearing can be prevented in advance.

In still another example, in the radial bearing, each of the bump foil and the thermal deformation member may be formed as a single body. Accordingly, the radial bearing including the thermal deformation member can be easily manufactured, and the axial deformation amount of the radial bearing can be equally maintained.

In still another example, in the radial bearing, the bump foil may be divided into a plurality of bump foils along the axial direction of the rotary shaft, and the thermal deformation member may be divided into a plurality of thermal deformation members along the axial direction of the rotary shaft. The plurality of thermal deformation members may be formed to have different thermal expansion coefficients. Accordingly, while the total bearing gap is narrowed at high temperature/high speed, a portion of the bearing gap is relatively widely maintained at low temperature/low speed, thereby reducing motor loss.

For example, the radial bearing may include a first bearing located close to the impeller; and a second bearing located more distant from the impeller than the first bearing. A thermal expansion coefficient of a first thermal deformation member constituting the first bearing may be formed higher than a thermal expansion coefficient of a second thermal deformation member constituting the second bearing. Accordingly, the bearing gap at an end side of the rotary shaft having a long length of a moment arm is formed narrower, so that the total bearing power of the radial bearing can be increased.

### Advantageous Effects of Invention

In the turbo compressor according to the present disclosure, the radial bearing may be configured as a gas foil bearing including a bump foil, and a thermal deformation member made of a material different from that of the bump foil may be adhered closely to one side surface of the bump foil. Accordingly, as the bearing gap between the radial bearing and the rotary shaft is actively varied according to an operation speed of the rotary shaft, the radial direction of the rotary shaft can be more stably supported as compared with that the rigidity of the bump foil is increased.

In the turbo compressor according to the present disclosure, the thermal deformation member may be made of a material having a thermal expansion coefficient higher than that of the bump foil. Accordingly, the height of the bump foil is increased by the thermal deformation member in a high-temperature/high-speed operation condition, so that the bearing gap can be reduced.

In the turbo compressor according to the present disclosure, the thermal deformation member may be formed in the same shape as the bump foil. Accordingly, the bump foil including the thermal deformation member can be easily formed.

In the turbo compressor according to the present disclosure, a deformation restricting portion restricting an elastic deformation range of the radial bearing may be arranged on one axial side of the radial bearing. Accordingly, although the rotary shaft receives a load in the radial direction, distortion of the rotary shaft can be restricted in the radial direction by the deformation restricting portion

### Brief Description of Drawings

FIG. 1 is a cross-sectional view showing an interior of a turbo compressor according to an embodiment.
FIG. 2 is an exploded perspective view showing a radial bearing according to this embodiment.
FIG. 3 is a perspective view showing a bump foil of the radial bearing in FIG. 2.
FIG. 4 is an assembled cross-sectional view showing the radial bearing in FIG. 2.
FIG. 5 is a cross-sectional view taken along line "IX-IX" of FIG. 4.
FIG. 6 is a cross-sectional view illustrating an effect of the radial bearing according to this embodiment.
FIG. 7 is a cross-sectional view showing another embodiment of the radial bearing.
FIG. 8 is a cross-sectional view showing still another embodiment of the radial bearing.
FIGS. 9 and 10 are cross-sectional views taken along line "X-X" of FIG. 8 illustrating a support state of the radial bearing according to a rotational speed of a rotary shaft.

### Best Mode

Hereinafter, a turbo compressor of the present disclosure will be described in detail with reference to an embodiment shown in the accompanying drawings. In this embodiment, a both-end type and multi-stage type turbo compressor in which a first impeller and a second impeller are installed on both ends of a rotary shaft, and an exit of a first compression unit including the first impeller is connected to an entrance of a second compression unit including the second impeller is described as an example, but the present disclosure is not necessarily limited thereto. For example, a thrust bearing to be described later may be equally applied even to a one-side type turbo compressor including at least one impeller.

In addition, in the turbo compressor according to this embodiment, a length direction of the rotary shaft is defined as an axial direction and a thickness direction of the rotary shaft is defined as a radial direction, a suction side of each impeller (or compression unit) on an axial line is defined as a front side and a discharge side of each impeller is defined as a rear side, and a front side surface is defined as a first side surface and a rear side surface is defined as a second side surface.

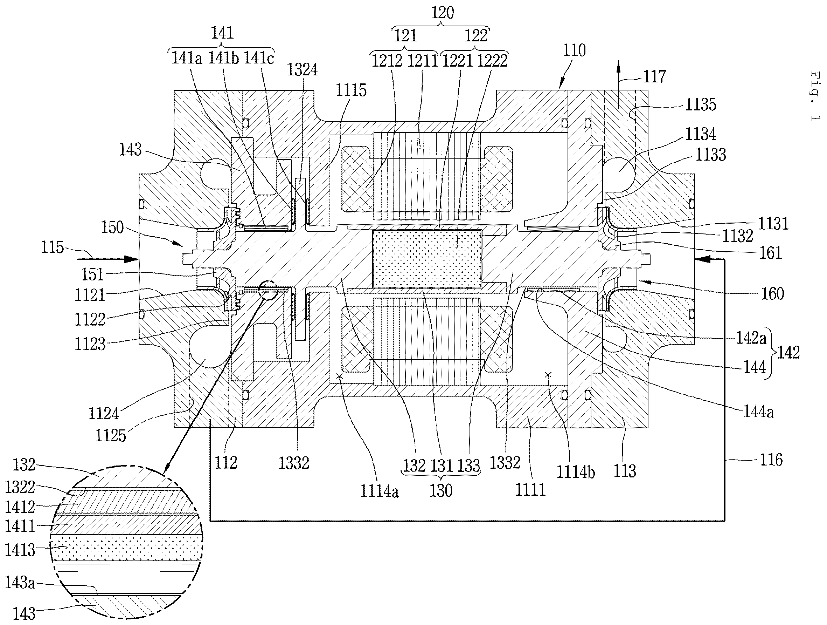

FIG. 1 is a cross-sectional view showing an interior of a turbo compressor according to an embodiment.

Referring to FIG. 1, the turbo compressor according to this embodiment may include a housing 110, an electric unit 120 constituting a driving motor, a rotary shaft 130, a bearing unit 140, a first compression unit (1-stage compression unit) 150, and a second compression unit (2-stage compression unit) 160.

The housing 110 according to this embodiment forms an appearance of the turbo compressor, and may include a motor housing 111, a first impeller housing 112, and a second impeller housing 113.

The motor housing 111 may be formed in a cylindrical shape having both open axial ends. However, a first flange portion 1111 and a second flange portion 1112, which extend in the radial direction to be fastened to the first impeller housing 112 and the second impeller housing 113, which will be described later, may be formed on both ends of the motor housing 111, respectively.

A motor chamber 1114 may be formed inside the motor housing 111. A stator 121 to be described later may be shrink-fitted in the middle of the motor chamber 1114 to be press-fitted into the motor chamber 1114. Therefore, the motor chamber 1114 may be partitioned into a first chamber 1114a which is a side of the first compression unit 150 and a second chamber 1114b which is a side of the second compression unit 160 with respect to the stator 121 to be described later.

A bearing support portion 1115 forming a portion of a first bearing portion 141 to be described later may be formed in the middle of the first chamber 1114a. The bearing support portion 1115 may extend in the radial direction toward the rotary shaft 130 from an inner circumferential surface of the motor housing 111, forming the first chamber 1114a. However, the bearing support portion 1115 may be press-fitted to the inner circumferential surface of the motor housing 111 or may be fastened to the inner circumferential surface of the motor housing 111, using a fastening member (no reference numeral). In this embodiment, an example is illustrated in which the bearing support portion 1115 extends as a single body from the inner circumferential surface of the motor housing 111.

A refrigerant connection pipe (not shown) may be connected to the motor housing 111 forming the first chamber 1114a. Therefore, a portion of a liquid refrigerant passing through a condenser (not shown) may be introduced into the first chamber 1114a, and the liquid refrigerant may be introduced into a first radial bearing 141a communicating with the first chamber 1114a. Accordingly, the liquid refrigerant which is a working fluid supports a bump foil constituting the first radial bearing 141a, thereby ensuring a bearing force against a first compression unit-side end portion of the rotary shaft 130 and refrigerating the first radial bearing 141a and the rotary shaft 130 facing the same.

The second chamber 1114b may substantially communicate with the first chamber 1114a as described above. However, a separate refrigerant connection pipe (not shown) may be connected to the motor housing 111 forming the second chamber 1114b. Therefore, a portion of the liquid refrigerant passing through the condenser (not shown) may be introduced into the second chamber 1114b, and the liquid refrigerant may be introduced into a second radial bearing 142a communicating with the second chamber 1114b. Accordingly, the liquid refrigerant which is the working fluid supports a bump foil constituting the second radial bearing 142a, thereby securing a bearing force against a second compression unit-side end portion of the rotary shaft 130 and refrigerating the second radial bearing 142a and the rotary shaft 130 facing the same.

Referring to FIG. 1, the first impeller housing 112 may include a first suction port 1121, a first impeller accommodation portion 1122, a first diffuser 1123, a first volute 1124, and a first discharge port 1125.

The first suction port 1121 may be formed in a direction passing through both axial side surfaces from a central portion of the first impeller housing 112. For example, the first suction port 1121 may be open in a front surface (a first side surface) of the first impeller housing 112 to extend in the axial direction. An entrance end of the first suction port 1121, to which a refrigerant suction pipe 115 is connected, may be wide, and an exit end of the first suction port 1121, to which the first impeller accommodation portion 1122 is connected, may be formed in a narrow truncated conical shape. Accordingly, the flow rate and flow velocity of the refrigerant sucked through the first suction port 1121 can be increased.

The first impeller accommodation portion 1122 may extend toward an outer circumferential surface of a first impeller 151 from the exit end of the first suction port 1121, and the first impeller 151 may be rotatably inserted into the first impeller accommodation portion 1122. Therefore, the first impeller accommodation portion 1122 may be defined as a first fixed-side shroud, and an inner circumferential surface of the first impeller accommodation portion 1122 may be formed to be curved along the shape of an outer surface of the first impeller 151.

The first diffuser 1123 may extend from a downstream-side end of the first impeller accommodation portion 1122. For example, the first diffuser 1123 may be formed as a space between a first side surface (no reference numeral) of a first bearing shell 143, which faces a first side surface 1324a of a thrust runner 1324 to be described later, and a second side surface (no reference numeral) of the first impeller housing 112, which faces the first side surface of the first bearing shell 143.

The first volute 1124 may be formed to be connected to a downstream side of the first diffuser 1123. For example, the first volute 1124 may be formed to be recessed in an axial rear surface of the first impeller housing 112. The first volute 1124 is formed in a ring shape to surround an outer circumferential side of the first diffuser 1123, and may be formed such that the cross-sectional area thereof gradually increases toward the first discharge port 1125 to be described later.

The first discharge port 1125 may be formed to pass through an outer surface of the first impeller housing 112 from a circumferential center of the first volute 1124. Therefore, while an entrance end of the first discharge port 1125 is connected to the first volute 1124, an exit end of the first discharge port 1125 may be connected to a second suction port 1131 of the second impeller housing 113 through a refrigerant connection pipe 116 to be described later.

Referring to FIG. 1, the second impeller housing 113 may be formed almost symmetrically to the first impeller housing 112 with respect to the electric unit 120. For example, the second impeller housing 113 according to this embodiment may include the second suction port 1131, a second impeller accommodation portion 1132, a second diffuser 1133, a second volute 1134, and a second discharge port 1135. The second suction port 1131 may be formed substantially identically to the first suction port 1121, the second impeller accommodation portion (may be defined as a second fixed-side shroud) 1132 may be formed substantially identically to the first impeller accommodation portion 1122, the second diffuser 1133 may be formed substantially identically to the first diffuser 1123, the second volute 1134 may be formed substantially identically to the first volute 1124, and the second discharge port 1135 may be formed substantially identically to the first discharge port 1125. Description of the second impeller housing 113 is replaced with the description of the first impeller housing 112.

Referring to FIG. 1, the electric unit 120 according to this embodiment may include the stator 121 and a rotor 122.

The stator 121 may include a stator core 1211 and stator coils 1212. The stator core 1211 may be press-fitted into the motor housing 111 to be fixed to the motor housing 111, and the stator coils 1212 may be wound around the stator core 1211. Therefore, a circumferential gap is generated between both the stator coils 1212 and becomes a refrigerant flow path through which the first chamber 1114a and the second chamber 1114b communicate with each other.

The rotor 122 may be spaced apart from an inner circumferential surface of the stator 121 to be rotatable inside the stator 121. The rotor 122 includes a rotor core 1221 and permanent magnets 1222, and the rotor core 1221 may be coupled to the rotary shaft 130 or may be omitted. When the rotor core 1221 is omitted, the permanent magnets 1222 may be attached to an outer circumferential surface of the rotary shaft 130 or may be mounted inside the rotary shaft 130. In this embodiment, an example is illustrated in which the permanent magnets 1222 are inserted into the rotary shaft 130 such that a portion of the rotary shaft 130 forms the rotor core 1221.

Referring to FIG. 1, the rotary shaft 130 according to this embodiment may include a driving shaft portion 131, a first impeller shaft portion 132, and a second impeller shaft portion 133.

The driving shaft portion 131 may be formed in a cylindrical shape to be rotatably inserted into the stator 121. For example, a length of the driving shaft portion 131 may be formed longer than or equal to an axial length of the stator 121, and an axial center of the driving shaft portion 131 may be coupled to an axial center of the stator 121 to be located on the same line as the axial center of the stator 121 in the radial direction.

The first impeller shaft portion 132 may extend or be assembled as a single body from one end of the driving shaft portion 131, and the second impeller shaft portion 133 may extend or be assembled as a single body from one end of the driving shaft portion 131. In this embodiment, an example is illustrated in which the first impeller shaft portion 132 and the second impeller shaft portion 133 are assembled from both ends of the driving shaft portion 131, respectively.

The thrust runner 1324 supported in the axial direction by a first axial bearing and a second axial bearing, which will be described later, may be formed on the first impeller shaft portion 132. For example, the thrust runner 1324 may extend in the radial direction from an outer circumferential surface of a first bearing surface portion 1322 to be formed in a disk shape.

Referring to FIG. 1, the thrust runner 1324 may be located between the first bearing shell 143 and the bearing support portion 1115 to be supported in the axial direction. In other words, the thrust rummer 1324 may form a movable-side support portion, and each of the first bearing shell 143 and the bearing support portion 1115 may form a fixed-side support portion. Therefore, the rotary shaft 130 may be supported in both axial directions together with the first impeller 151 and a second impeller 161, which are coupled to both ends of the rotary shaft 130.

The thrust runner 1324 may be formed such that an outer circumferential surface thereof is spaced apart from an inner circumferential surface of the first chamber 1114a. An outer diameter of the thrust runner 1324 may be formed smaller than an inner diameter of the first chamber 1114a. Therefore, the refrigerant supplied to a first axial bearing 141b and a second axial bearing 141c through a refrigerant supply unit flows toward the driving motor 120.

Although not shown in the drawing, the first axial bearing 141b may be arranged on the first side surface 1324a of the thrust runner 1324, and the second axial bearing 141c may be arranged on a second side surface 1324b of the thrust runner 1324. In this case, as both the first axial bearing 141b and the second axial bearing 141c are installed on the rotary shaft 130, the installation and assembly of the first axial bearing 141b and the second axial bearing 141c can be easily accomplished.

Referring to FIG. 1, the second impeller shaft portion 133 may be inserted into a second compression unit-side end portion (hereinafter, referred to as a second end portion) of the driving shaft portion 131 to be fixed to the driving shaft portion 131. For example, like the first impeller shaft portion 132, the second impeller shaft portion 133 may be welded and coupled to the driving shaft portion 131 in a state in which the second impeller shaft portion 133 is press-fitted into the second end portion of the driving shaft portion 131.

The second impeller shaft portion 133 may be formed symmetrically to the first impeller shaft portion 132 with respect to the driving shaft portion 131, and a thrust runner (not shown) may be excluded as an axial bearing is not arranged in a second bearing portion 142. However, in some cases, the axial bearing may be arranged even in the second bearing portion 142 such that the thrust runner (not shown) is arranged on the second impeller shaft portion 133.

The bearing unit 140 according to this embodiment may include the first bearing portion 141 and the second bearing portion 142. The bearing portion 141 may be located between the electric unit (or driving motor) 120 and the first compression unit 150, and the second bearing portion 142 may be located between the electric unit (or driving motor) 120 and the second compression unit 160. Accordingly, the bearing unit 140 can stably support the first compression unit 150 and the second compression unit 160, which are respectively arranged on both the ends of the rotary shaft 130.

Referring to FIG. 1, the first bearing portion 141 may include the first radial bearing 141a, the first axial bearing 141b, and the second axial bearing 141c. The first radial bearing 141a may be arranged in a first shaft hole 143a forming an inner circumferential surface of the first bearing shell 143, the first axial bearing 141b may be arranged on one side surface of the first bearing shell 143, and the second axial bearing 141c may be arranged on one side surface of the bearing support portion 1115.

The first radial bearing 141a may be configured as a gas foil bearing. For example, the first radial bearing 141a may include an uneven-shaped bump foil 1411 and an arc-shaped top foil 1412.

The first radial bearing 141a may be arranged on the inner circumferential surface of the first bearing shell 143 to face the outer circumferential surface of the rotary shaft 130, accurately the first bearing surface portion 1322 in the radial direction. Therefore, during rotation of the rotary shaft 130, the liquid refrigerant which is the working fluid is introduced into the first radial bearing 141a to support the rotary shaft 130 in the radial direction while forming a kind of oil film by means of a dynamic pressure. The first radial bearing 141a will be again described later.

Each of the first axial bearing 141b and the second axial bearing 141c according to this embodiment may be configured as a gas foil bearing as described above. The first axial bearing 141b and the second axial bearing 141c support the axial direction of the rotary shaft 130, using a pressure (dynamic pressure) generated during rotation of the rotary shaft 130. Accordingly, the rotary shaft 130 can be stably supported with respect to the axial direction during start and/or an operation of the compressor. Each of the first axial bearing 141b and the second axial bearing 141c is configured as a gas foil bearing widely known in the art, and therefore, descriptions of the first axial bearing 141b and the second axial bearing 141c are omitted.

Referring to FIG. 1, the second bearing portion 142 according to this embodiment may include the second radial bearing 142a arranged in a second bearing shell 144. In other words, the second radial bearing 142a may be arranged in a second shaft hole 144a forming an inner circumferential surface of the second bearing shell 144.

The second radial bearing 142a may be configured as a gas foil bearing. For example, the second radial bearing 142a may be configured identically to the first radial bearing 141a. Description of the second radial bearing 142a is replaced with the description of the first radial bearing 141a.

Referring to FIG. 1, the first compression unit 150 according to this embodiment may include the first impeller 151, the first diffuser 1123, and the first volute 1124. However, among the components constituting the first compression unit 150, the first diffuser 1123 and the first volute 1124 are the same as described above in the first impeller housing 112. That is, the first diffuser 1123 may be formed between the first impeller housing 112 and the first bearing shell 143, and the first volute 1124 may be formed in the first impeller housing 112.

The first impeller 151 along with the first diffuser 1123 and the first volute 1124 functionally forms the first compression unit 150 which is the 1-stage compression unit as described above. Therefore, a suction side of the first impeller 151 may be connected to the refrigerant suction pipe 115, and a discharge side of the first impeller 151 may be connected to a suction side of the second impeller 161 forming a portion of the 2-stage compression unit (second compression unit) by the refrigerant connection pipe 116.

Referring to FIG. 1, the second compression unit 160 according to this embodiment may include the second impeller 161, the second diffuser 1133, and the second volute 1134. However, among the components constituting the second compression unit 160, the second diffuser 1133 and the second volute 1134 are the same as described above in the second impeller housing 113. That is, the second diffuser 1133 may be formed between the second impeller housing 113 and the second bearing shell 144, and the second volute 1134 may be formed in the second impeller housing 113.

The second impeller 161 along with the second diffuser 1133 and the second volute 1134 functionally forms the 2-stage compression unit. Therefore, the suction side of the second impeller 161 may be connected to the discharge side of the first impeller 151 by the refrigerant connection pipe 116, and a discharge side of the second impeller 161 may be connected to an entrance side of the condenser (not shown) by a refrigerant discharge pipe 117.

A diameter of the second impeller 161 may be formed smaller than that of the first impeller 151, and a whole shape of the second impeller 161 may be formed almost identically to that of the first impeller 151. Therefore, description of the shape of the second impeller 161 is replaced with the description of the first impeller 151.

The turbo compressor according to this embodiment described above is operated as follows.

That is, when power is applied to the electric unit 120, a rotational force is generated by an induced current between the stator 121 and the rotor 122, and the rotary shaft 130 rotates together with the rotor 122 by means of the rotational force.

Then, the rotational force of the electric unit 120 is transferred to the first impeller 151 and the second impeller 161 by the rotary shaft 130, and the first impeller 151 and the second impeller 161 simultaneously rotate in the respective impeller accommodation portion 1122 and 1132.

Then, the refrigerant passing through an evaporator (not shown) of a refrigeration cycle apparatus is introduced into the first impeller accommodation portion 1122 through the refrigerant suction pipe 115 and the first suction port 1121. The static pressure of the refrigerant increases as the refrigerant flows while whirling along the first impeller 151, and at the same time, the refrigerant passes through the first diffuser 1123 with a centrifugal force.

Then, kinetic energy of the refrigerant passing through the first diffuser 1123 leads to an increase in pressure head in the first diffuser 1123 by means of the centrifugal force, and the centrifugally compressed high-temperature and high-pressure refrigerant is gathered in the first volute 1124 to be discharged from the first compression unit 150 through the first discharge port 1125.

Then, the refrigerant discharged from the first compression unit 150 is guided to the second suction port 1131 of the second impeller housing 113 constituting the second compression unit 160 through the refrigerant connection pipe 116. The static pressure of the refrigerant increases as the refrigerant flows while whirling along the second impeller 161, and at the same time, the refrigerant passes through the second diffuser 1133 with the centrifugal force.

Then, the refrigerant passing through the second diffuser 1133 is compressed up to a desired pressure by means of the centrifugal force, and the 2-stage compressed high-temperature and high-pressure refrigerant is gathered in the second volute 1134 to be discharged to the condenser (not shown) through the second discharge port 1135 and the refrigerant discharge pipe 117. Therefore, the above-described series of processes is repeated.

In this instance, the first impeller 151 and the second impeller 161 receive thrust forces thrust to rear sides of the respective impellers 151 and 161 by the refrigerant sucked through the first and second suction ports 1121 and 1131 of the impeller housings 112 and 113. However, in this embodiment, in the case of a so-called both-end type turbo compressor in which the first impeller 151 and the second impeller 161 are arranged to turn their backs on each other, a thrust force generated in the first impeller 151 and a thrust force generated in the second impeller 161 may be cancelled while having directions opposite to each other.

However, even in the both-end type turbo compressor, a thrust force generated in the first compression unit 150 and a thrust force generated in the second compression unit 160 may not be the same or constant during an actual operation. Therefore, the rotary shaft 130 may be thrust in the axial direction toward the first compression unit 150 or the second compression unit 160, and hence an axial bearing may be separately arranged at a side of the first compression unit 150 and/or a side of the second compression unit 160. In this embodiment, the axial bearings 141b and 141c are arranged at the side of the first compression unit 150.

In addition, the above-described radial bearings 141a and 142a are included in a one-side type turbo compressor in addition to the both-end type turbo compressor to support the radial direction of the rotary shaft 130. Accordingly, although an eccentric load in the radial direction occurs in the rotary shaft 130, the eccentric load is blocked, thereby suppressing the impellers 151 and 161 coupled to the rotary shaft 130 from colliding with the impeller housings 112 and 113, and the like. In this embodiment, an example is illustrated in which the first radial bearing 141a the second radial bearing 142a arranged on both sides of the driving motor 120, respectively.

Each of the first radial bearing 141a and the second radial bearing 142a may be configured as a gas foil bearing using a dynamic pressure generated in rotation of the rotary shaft 130 as described above. For example, the first radial bearing 141a and the second radial bearing 142a may include bump foils 1411 and (no reference numeral) having an elastic force and top foils 1412 and (no reference numeral) lubricating between the bum foils 1411 and (no reference numeral) and the rotary shaft 130, respectively. Accordingly, the first radial bearing 141a and the second radial bearing 142a have high elastic characteristics, to effectively support external impact and high load, which cause a large displacement.

However, since the gas foil bearing has formed in a structure having a combination of rigidity and damping because of characteristics thereof, the bump foils 1411 and (no reference numeral) causes plastic deformation beyond an elastic range thereof, and therefore, the gas foil bearing cannot perform a role as each of the radial bearings 141a and 142a. By considering this, the rigidity of the bump foils 1411 and (no reference numeral) is to be increased such that the eccentric load of the rotary shaft 130 can be supported without causing the plastic deformation of the bump foils 1411 and (no reference numeral).

However, when the rigidity of the bump foils 1411 and (no reference numeral) is increased, a damping effect may be deteriorated. In other words, while radial shaking of the rotary shaft 130 is increased in a high-temperature/high-speed operation condition, a bearing gap G defined as a gap between the rotary shaft 130 and the radial bearings 141a and 142a is also increased. Then, when the rigidity of the bearing is excessively increased, the damping effect may be deteriorated as the radial shaking of the rotary shaft 130 is rather increased. Besides, when impact between the rotary shaft 130 and the radial bearings 141a and 142a occurs in the high-temperature/high-speed operation condition, the reliability of the radial bearings 141a and 142a having a relatively low rigidity may be deteriorated.

Therefore, in this embodiment, a thermal deformation member having a thermal expansion coefficient different from those of the bearing shell and the bump foil may be arranged between the bearing shell and the bump foil. Accordingly, the bearing gap between the rotary shaft and the radial bearing is reduced in the high-temperature/high-speed operation condition, thereby minimizing the shaking of the rotary shaft, and simultaneously, excessive narrowing of the bearing gap between the rotary shaft and the radial bearing is suppressed, thereby reducing motor loss. Since the first radial bearing and the second radial bearing according to this embodiment are formed identically to each other, hereinafter, the first radial bearing will be mainly described, and description of the second radial bearing will be replaced with the description of the first radial bearing.

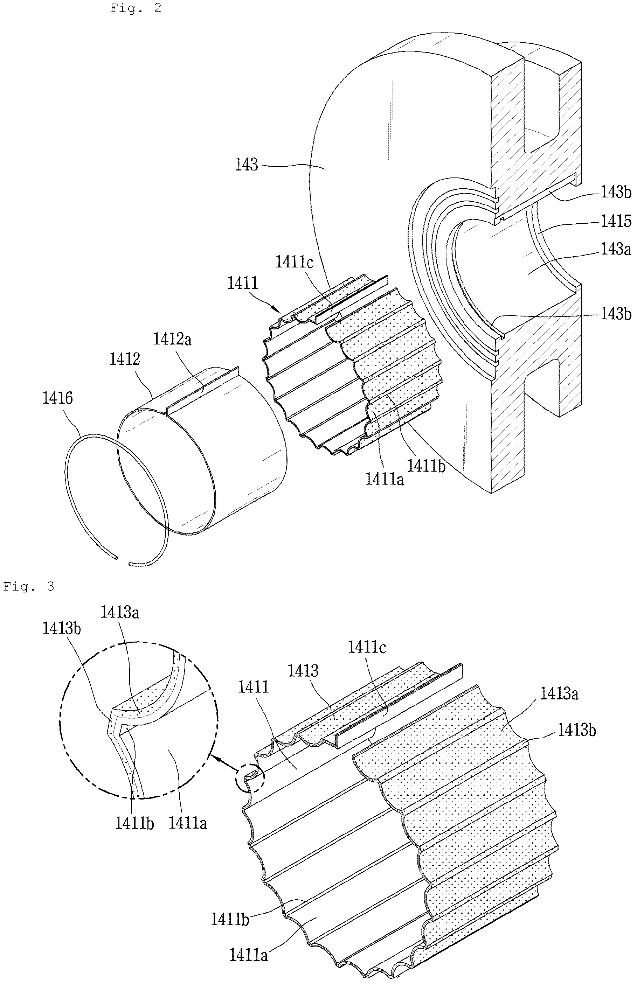

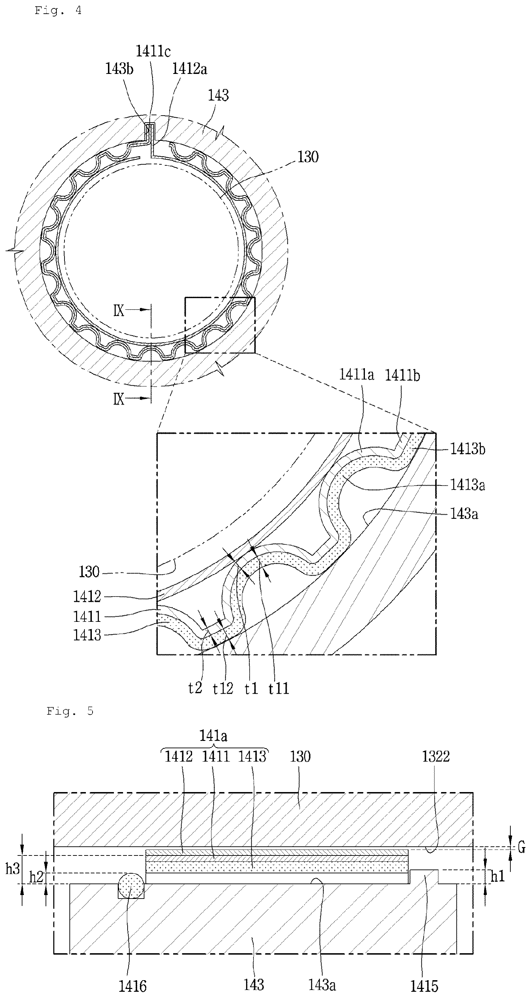

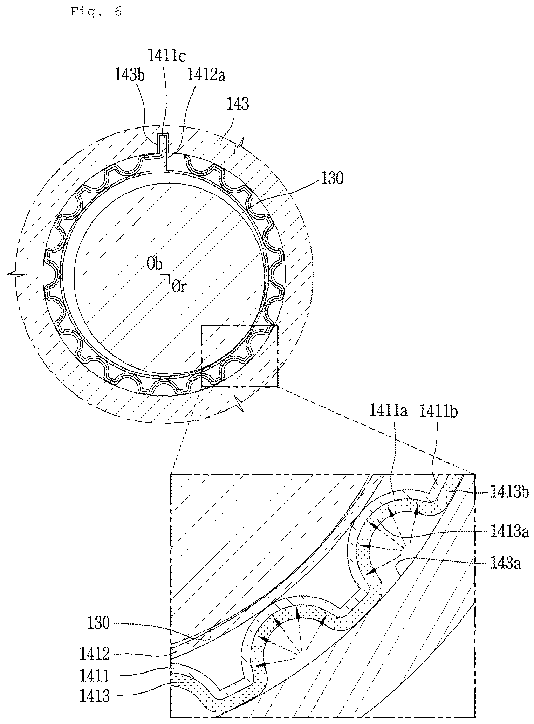

FIG. 2 is an exploded perspective view showing a radial bearing according to this embodiment. FIG. 3 is a perspective view showing a bump foil of the radial bearing in FIG. 2. FIG. 4 is an assembled cross-sectional view showing the radial bearing in FIG. 2. FIG. 5 is a cross-sectional view taken along line "IX-IX" of FIG. 4. FIG. 6 is a cross-sectional view illustrating an effect of the radial bearing according to this embodiment.

Referring to FIGS. 2 to 4, the first radial bearing 141a according to this embodiment may include the first bump foil 1411, the first top foil 1412, and a first thermal deformation member 1413. The first bump foil 1411 may protrude convexly in the radial direction to be uneven along the circumferential direction, the first top foil 1412 may be spaced apart from the outer circumferential surface of the rotary shaft 130 by a predetermined interval to surround the first bump foil 1411, and the first thermal deformation member 1413 may be adhered closely to the first bump foil 1411 at the opposite side of the first top foil 1412. Therefore, in the first radial bearing 141a, the first thermal deformation member 1413, the first bump foil 1411, and the first top foil 1412 may be sequentially arranged in a direction facing the rotary shaft 130 from the first bearing shell 143.

The first bump foil 1411 is formed by rolling a thin steel plate in a cylindrical shape, and may be formed to be uneven in an embossed cross-sectional shape toward the rotary shaft 130 in axial projection. Accordingly, the first bump foil 1411 has an elastic force in the radial direction to be able to support the rotary shaft 130 in the radial direction.

The first bump foil 1411 according to this embodiment may include first foil curved portions 1411a, first foil connection portions 1411b, and a first foil fixing portion 1411c. The first foil curved portion 1411a is a portion at which the first bump foil 1411 generates the elastic force, the first foil connection portion 1411b is a portion connecting the adjacent first foil curved portions 1411a to each other, and the first foil fixing portion 1411c is a portion fixing the first bump foil 1411 to the first bearing shell 143. The first foil curved portions 1411a and the first foil connection portion 1411b may be alternately formed, and the first foil fixing portion 1411c may be formed to be bent at one end of the first bump foil 1411.

The first foil curved portion 1411a may be formed in a semicircular cross-sectional shape. For example, the first foil curved portion 1411a may be formed such that both sides thereof are symmetrical to each other with respect to a peak thereof. Therefore, one first foil curved portion 1411a may have the same elastic force in the circumferential direction.

The first foil connection portion 1411b may be formed in an arc cross-sectional shape. For example, the first foil connection portion 1411b may be formed to have the same curvature as an inner circumferential surface of the first shaft hole 143a of the first bearing shell 143. Therefore, the first foil connection portion 1411b is adhered closely to the inner circumferential surface of the first shaft hole 143a of the first bearing shell 143, to support elastic deformation of the first foil curved portion 1411a.

The first foil fixing portion 1411c may be formed to be bent in a direction facing the first shaft hole 143a of the first bearing shell 143 from the one end of the first bump foil 1411 as described above. Therefore, the first foil fixing portion 1411c may be inserted into a first foil fixing groove 143b arranged in the first shaft hole 143a of the first bearing shell 143 to be coupled to the first bearing shell 143.

Like the first bump foil 1411, the first top foil 1412 according to this embodiment may be formed by rolling a thin steel plate in a cylindrical shape. The first top foil 1412 may widely distribute a radial load from the rotary shaft 130.

Like the first bump foil 1411, a first top foil fixing portion 1412a may be formed to be bent at one end of the first top foil 1412. The first top foil fixing portion 1412a along with the first foil fixing portion 1411c may be inserted into the first foil fixing groove 143b to be coupled to the first bearing shell 143. Therefore, the first top foil 1412 may be fixed to the first bearing shell 143 while surrounding an inner circumferential surface of the first bump foil 1411.

The first thermal deformation member 1413 according to this embodiment may be formed to be the same or almost the same as the above-described first bump foil 1411. For example, the first thermal deformation member 1413 may include first thermal deformation curved portions 1413a and first thermal deformation connection portions 1413b. The first thermal deformation curved portion 1413a may be formed to correspond to the first foil curved portion 1411a, and the first thermal deformation connection portion 1413b may be formed to correspond to the first foil connection portion 1411b. Therefore, description of the first thermal deformation curved portion 1413a is replaced with the description of the first foil curved portion 1411a, and description of the first thermal deformation connection portion 1413b is replaced with the description of the first foil connection portion 1411b.

However, the first thermal deformation member 1413 may be made of a material different from that of the first bump foil 1411, i.e., a material having a thermal expansion coefficient higher than that of the first bump foil 1411. For example, the first thermal deformation member 1413 may be made of polymer, aluminum, or the like, which has a thermal expansion coefficient higher than that of the first bump foil 1411 made of the steel plate. Therefore, the first thermal deformation member 1413 may be formed on the first bump foil 1411 through insert molding or insert die casting. Accordingly, an inner circumferential surface of the first thermal deformation member 1413 is adhered closely to the outer circumferential surface of the first bump foil 1411, so that the first bump foil 1411 and the first thermal deformation member 1413 can be deformed in the same direction with the same deformation amount.

A thickness t1 of the first thermal deformation member 1413 may be formed to be the same or almost the same along the circumferential direction. For example, a thickness t11 of the first thermal deformation curved portion 1413a and a thickness t12 of the first thermal deformation connection portion 1413b may be formed to be the same. Accordingly, the first thermal deformation member 1413 can be easily formed. Furthermore, as the first thermal deformation member 1413 is deformed by the same height along the circumferential direction, a coupling state between the first bump foil 1411 and the first thermal deformation member 1413 can be firmly maintained.

In addition, the thickness (or surface area) t1 of the first thermal deformation member 1413 may be formed equal to or larger than a thickness (or surface area) t2 of the first bump foil 1411. In this embodiment, an example is illustrated in which the thickness t1 of the first thermal deformation member 1413 is formed larger than the thickness t2 of the first bump foil 1411. Therefore, as the surface area of the first thermal deformation member 1413 is formed larger than the surface area of the first bump foil 1411, the first thermal deformation member 1413 may be more thermally deformed during a high-temperature/high-speed operation. Accordingly, the bearing gap G between the rotary shaft 130 and the first radial bearing 141a can be narrowed, and thus shaking of the rotary shaft 130 can be more effectively suppressed.

Meanwhile, as shown in FIG. 5, a first deformation restricting portion 1415 restricting an elastic deformation range of the first radial bearing 141a may be arranged on one axial side of the first radial bearing 141a. For example, a first foil support ring 1416 restricting the axial direction of the first bump foil 1411 and the first top foil 1412, which constitute the first radial bearing 141a, may be arranged on the other axial side of the first radial bearing 141a, and a radial height h1 of the first deformation restricting portion 1415 may be formed larger than or equal to a radial height h2 of the first foil support ring 1416. In this embodiment, an example is illustrated in which the radial height h1 of the first deformation restricting portion 1415 is formed larger than the radial height H2 of the first foil support ring 1416.

With respect to the inner circumferential surface of the first bearing shell 143, the height h1 of the first deformation restricting portion 1415 may be formed smaller than a height of the first bump foil 1411 and may be formed larger than the height h2 of the first foil support ring 1416. In this case, the height h1 of the first deformation restricting portion 1415 may be formed to be 40% to 50% of the height h3 of the first bump foil 1411. Therefore, although the rotary shaft 130 receives a load in the radial direction, distortion of the rotary shaft 130 may be restricted in the radial direction by the first deformation restricting portion 1415. Accordingly, the deformation range of the first bump foil 1411 constituting the first radial bearing 141a is restricted, so that damage due to over-deformation of the first radial bearing 141a can be prevented in advance.

When the first thermal deformation member 1413 having a high thermal expansion coefficient is coupled to one side surface of the first bump foil 1411 constituting the first radial bearing 141a as described above, the bearing gap G between the rotary shaft 130 and the first radial bearing 141a may be actively varied according to an operation condition of the compressor.

In other words, the first thermal deformation member 1413 quickly thermally expands by adapting to a temperature therearound in a high-temperature/high-speed operation condition. Then, the first bump foil 1411 coupled to the first thermal deformation member 1413 rises as if the first bump foil 1411 swells in the direction facing the rotary shaft 130 while being pushed by the first thermal deformation member 1413. Then the bearing gap G between the rotary shaft 130 and the first radial bearing 141a is narrowed, so that the shaking of the rotary shaft 130 can be suppressed at the least.

In addition, as shown in FIG. 6, although a center Or of the rotary shaft 130 is deviated in one radial direction with respect to a center Ob of the first bearing shell 143, the first thermal deformation member is thermally deformed to support the first bump foil located in the direction, so that excessive deviation of the rotary shaft can be suppressed. Accordingly, the shaking of the rotary shaft can be suppressed at the least as described above.

At the same time, as the thermal deformation amount of the first thermal deformation member is decreased in a low-temperature/low-speed operation condition, the height of the first thermal deformation member and the first bump foil may be lowered as compared with the high-temperature/high-speed operation condition. Accordingly, the bearing gap between the rotary shaft and the radial bearing is suppressed from being excessively narrowed, thereby reducing motor loss.

This is equally applied to the second radial bearing 142a as described above.

Meanwhile, a case where another embodiment of the thermal deformation member exists is as follows.

That is, while the thickness of the thermal deformation member is formed to be the same along the circumferential direction in the above-described embodiment, the thickness of the thermal deformation member may be formed differently along the circumferential direction in some cases. Since the first radial bearing and the second radial bearing are formed identically to each other even in this case, hereinafter, the first radial bearing will be mainly described, and description of the second radial bearing will be replaced with the description of the first radial bearing.

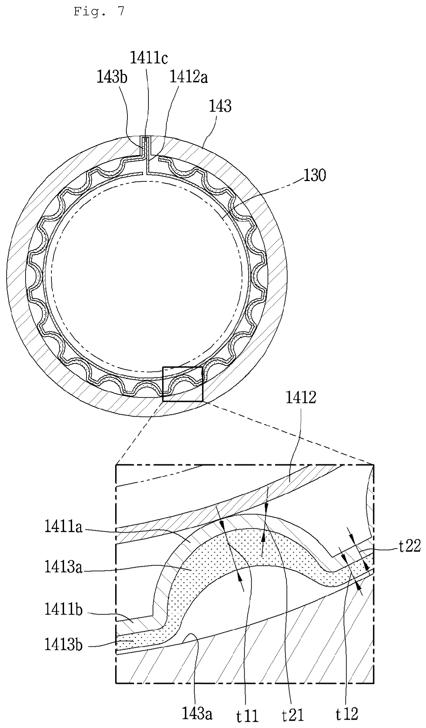

FIG. 7 is a cross-sectional view showing another embodiment of the radial bearing.

Referring to FIG. 7, a first radial bearing 141a according to this embodiment may be formed almost identically to the first radial bearing 141a of the above-described embodiment. For example, the first radial bearing 141a may include a first bump foil 1411, a first top foil 1412, and a first thermal deformation member 1413, and a basic configuration and an operation effect according thereto in the first bump foil 1411, the first top foil 1412, and the first thermal deformation member 1413 may be formed almost identically to those in the first bump foil 1411, the first top foil 1412, and the first thermal deformation member 1413, which are illustrated in the above-described embodiment of FIG. 4.

However, in this embodiment, the thickness of the first thermal deformation member 1413 may be formed differently along the circumferential direction. For example, a thickness t11 of a first thermal deformation curved portion 1413a may be formed larger than a thickness t12 of a first thermal deformation connection portion 1413b. In other words, the thickness t11 of the first thermal deformation curved portion 1413a may be formed larger than a thickness t21 of a first foil curved portion 1411a and may be formed larger than the thickness t12 of the first thermal deformation connection portion 1413b.

When the thickness t11 of the first thermal deformation curved portion 1413a is formed larger than the thickness t12 of the first thermal deformation connection portion 1413b as described above, a thermal deformation amount of the first thermal deformation curved portion 1413a is larger than a thermal deformation amount of the first thermal deformation connection portion 1413b in a high-temperature/high-speed operation condition. Then, the first thermal deformation curved portion 1413a further rises toward the rotary shaft 130. Then, the height of the first foil curved portion 1411a in contact with the first thermal deformation curved portion 1413a further rises together with the first thermal deformation curved portion 1413a. Therefore, the bearing gap G between the first radial bearing 141a and the rotary shaft 130 is further reduced, so that the radial direction of the rotary shaft 130 can be more stably supported in the high-temperature/high-speed operation condition.

In this case, the first thermal deformation curved portion 1413a may be formed thicker as approaching the circumferential center thereof. In other words, the first thermal deformation curved portion 1413a may be formed thickest at a peak closest to the rotary shaft 130. Accordingly, as the first thermal deformation curved portion 1413a along with the first foil curved portion 1411a is largely thermally deformed toward the rotary shaft 130, the bearing gap G can be quickly and maximally reduced.

Even in this case, the height h1 of the first deformation restricting portion 1415 may be formed larger than the height h2 of the first foil support ring 1416 and be formed smaller than the height h3 of the first bump foil 1411 as illustrated in the above-described embodiment. Accordingly, the deformation range of the first bump foil 1411 is restricted, so that damage due to over-deformation of the first radial bearing 141a can be prevented in advance.

Meanwhile, a case where another embodiment of the radial bearing exists is as follows.

That is, while only one radial bearing is formed in each of the above-described embodiments, a plurality of radial bearings may be formed in each or at least one of the above-described embodiments in some cases. Since the first radial bearing and the second radial bearing are formed identically to each other even in this case, hereinafter, the first radial bearing will be mainly described, and description of the second radial bearing will be replaced with the description of the first radial bearing.

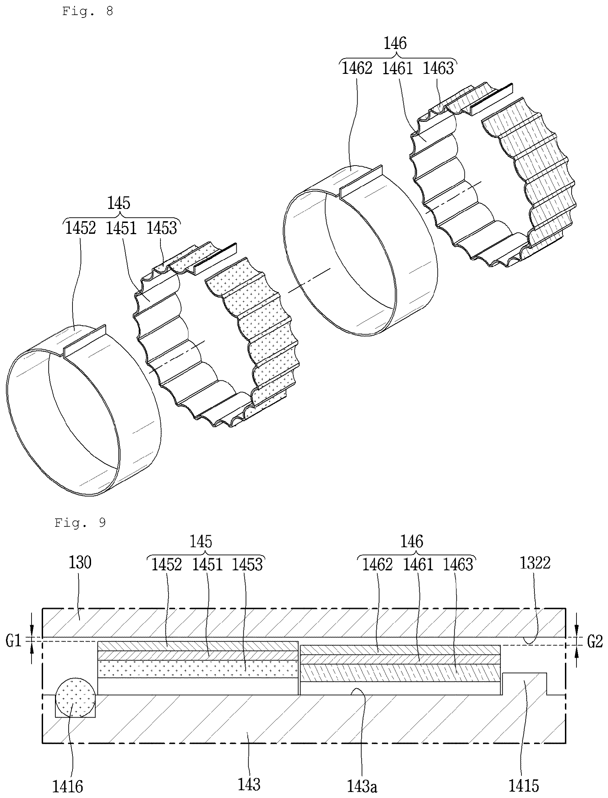

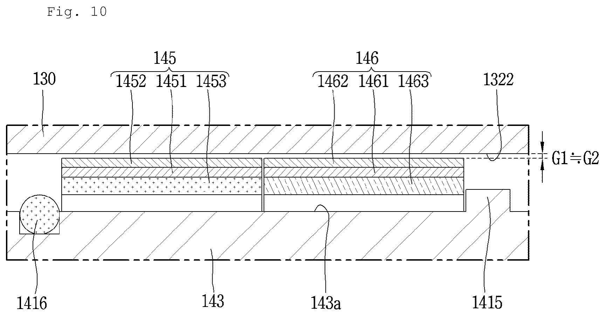

FIG. 8 is a cross-sectional view showing still another embodiment of the radial bearing. FIGS. 9 and 10 are views illustrating a support state of the radial bearing according to a rotational speed of the rotary shaft.

Referring to FIG. 8, a first radial bearing 141a according to this embodiment may be formed almost identically to the first radial bearings 141a of the above-described embodiments. For example, the first radial bearing 141a may include first bump foils 1451 and 1461, first top foils 1452 and 1462, and first thermal deformation members 1453 and 1463, and a basic configuration and an operation effect according thereto in the first bump foils 1451 and 1461, the first top foils 1452 and 1462, and the first thermal deformation members 1453 and 1463 may be formed almost identically to those in the first bump foils 1411, the first top foils 1412, and the first thermal deformation members 1413, which are illustrated in the above-described embodiments of FIGS. 4 and 7.

However, in this embodiment, the first radial bearing 141a may be divided into a first bearing 145 and a second bearing 146 along the axial direction of the rotary shaft 130. For example, a first radial bearing close to the first impeller 151 may be defined as the first bearing 145, and a first radial bearing distant from the first impeller 151 may be defined as the second bearing 146.

In this case, the first bearing 145 may include a first bump foil 1451, a first top foil 1452, and a first thermal deformation member 1453, and the second bearing 146 may include a second bump foil 1461, a second top foil 1462, and a second thermal deformation member 1463. Therefore, the first radial bearing 141a may be configured with a plurality of gas foil bearings.

In addition, the first bump foil 1451 and the second bump foil 1461 may be formed identically to each other, and the first top foil 1452 and the second top foil 1462 may be formed identically to each other. The first thermal deformation member 1453 and the second thermal deformation member 1463 are formed in the same shape, and may be made of different kinds of materials having different thermal expansion coefficients. Therefore, a thermal expansion height of the first bump foil 1451 and a thermal expansion height of the second bump foil 1461 may be formed different from each other in the same operation condition.

When the first thermal deformation member 1453 and the second thermal deformation member 1463 are made of different kinds of materials having different thermal expansion coefficients, the bearing area of the rotary shaft 130 and the first radial bearing 141a may be varied according to a rotational speed of the rotary shaft 130. A case where a thermal expansion coefficient of the first thermal deformation member 1453 is higher than a thermal expansion coefficient of the second thermal deformation member 1463 is described as an example as follows.

First, as shown in FIG. 9, when the rotary shaft 130 rotates at a first speed, only the first bump foil 1451 to which the first thermal deformation member 1453 is coupled rises toward rotary shaft, or the first bump foil 1451 rises higher toward the rotary shaft 130 than the second bump foil 1461 to which the second thermal deformation member 1463 is coupled.

In other words, at the first speed, a first gap G1 between the first bearing 145 and the rotary shaft 130 becomes narrower than a second gap G2 between the second bearing 146 and the rotary shaft 130. Then, while the first bearing 145 leadingly supports the rotary shaft 130, the second bearing 146 maintains a state in which the second bearing 146 is widely spaced apart from the rotary shaft 130. Thus, at the first speed, a substantially bearing area between the first radial bearing 141a and the rotary shaft 130 can be suppressed from being excessively increased. Accordingly, the reliability of the first radial bearing 141a can be maintained, and the gap between the first radial bearing 141a and the rotary shaft 130 can be widely maintained, thereby suppressing motor loss (see FIG. 9).

Next, as shown in FIG. 10, when the rotary shaft 130 rotates as a second speed higher than the first speed, the second bump foil 1461 to which the second thermal deformation member 1463 is coupled in addition to the first bump foil 1451 to which the first thermal deformation member 1453 is coupled rises up to a sufficient height toward the rotary shaft 130. In other words, at the second speed, the second gap G2 between the second bearing 146 and the rotary shaft 130 in addition to the first gap G1 between the first bearing 145 and the rotary shaft 130 is sufficiently narrowed. Accordingly, as the bearing area between the first radial bearing 141a and the rotary shaft 130 is sufficiently secured, the rotary shaft 130 can be stably supported even in ultra-high speed rotation.

In this case, the first thermal deformation member 1453 distant from the center of the rotary shaft 130 may be made of a high thermal expansion coefficient as compared with the second thermal deformation member 1463 close to the center of the rotary shaft 130. In other words, a bearing strength in the first bearing 145 having a long length of a moment arm may be formed higher than a bearing strength in the second bearing 146 having a short length of a moment arm. Accordingly, the total bearing power of the first radial bearing 141a is increased, thereby more stably supporting the rotary shaft 130.

Although not shown in the drawings, the first radial bearing 141a may be divided into three or more bearings along the axial direction. In this case, thermal deformation members constituting the respective bearings may be made of materials having different thermal expansion coefficients. Accordingly, the bearing gap is further subdivided according to the rotational speed of the rotary shaft 130, thereby more stably supporting the radial direction of the rotary shaft 130.

## Claims

1. A turbo compressor comprising:
a housing;
a rotary shaft rotatably arranged inside the housing;
an impeller coupled to the rotary shaft to rotate;
a bearing shell arranged on one axial side of the impeller and having the rotary shaft passing therethrough in an axial direction; and
a radial bearing arranged on an inner circumferential surface of the bearing shell and comprising a bump foil to rotatably and elastically support a radial direction of the rotary shaft,
wherein the radial bearing comprises a thermal deformation member made of a material different from that of the bump foil to be adhered closely to the bump foil.

2. The turbo compressor of claim 1, wherein the thermal deformation member is made of a material having a thermal expansion coefficient higher than that of the bump foil.

3. The turbo compressor of claim 2, wherein the thermal deformation member is arranged on the opposite side of the rotary shaft with the bump foil interposed therebetween.

4. The turbo compressor of claim 1, wherein the thermal deformation member is formed in the same shape as the bump foil.

5. The turbo compressor of claim 1, wherein a thickness of the thermal deformation member is formed larger than or equal to a thickness of the bump foil.

6. The turbo compressor of claim 1, wherein the thermal deformation material is formed to have the same thickness along a circumferential direction.

7. The turbo compressor of claim 1, wherein the bump foil comprises a plurality of foil curved portions protruding toward the rotary shaft and a foil connection portion connecting the plurality of foil curved portions to each other,
wherein the thermal deformation member comprises a plurality of thermal deformation curved portions adhered closely to the foil curved portions to protrude toward the rotary shaft and a thermal deformation connection portion adhered closely to the foil connection portion to connect the plurality of thermal deformation curved portions to each other, and
wherein a thickness of the thermal deformation curved portion is formed larger than or equal to a thickness of the thermal deformation connection portion.

8. The turbo compressor of claim 7, wherein the thickness of the thermal deformation curved portion is formed thicker as approaching a center of the circumferential direction.

9. The turbo compressor of claim 1, wherein a deformation restricting portion restricting an elastic deformation range of the radial bearing is arranged on one axial side of the radial bearing.

10. The turbo compressor of claim 9, wherein a foil support ring supporting the radial bearing in the axial direction is arranged on the other axial side of the radial bearing, and
wherein a height of the deformation restricting portion is formed smaller than a height of the bump foil and is formed larger than or equal to a height of the foil support ring.

11. The turbo compressor of any one of claims 1 to 10, wherein, in the radial bearing, each of the bump foil and the thermal deformation member is formed as a single body.

12. The turbo compressor of any one of claims 1 to 10, wherein, in the radial bearing, the bump foil is divided into a plurality of bump foils along the axial direction of the rotary shaft, and the thermal deformation member is divided into a plurality of thermal deformation members along the axial direction of the rotary shaft, and
wherein the plurality of thermal deformation members are formed to have different thermal expansion coefficients.

13. The turbo compressor of claim 12, wherein the radial bearing comprises:
a first bearing located close to the impeller; and
a second bearing located more distant from the impeller than the first bearing, and
wherein a thermal expansion coefficient of a first thermal deformation member constituting the first bearing is formed higher than a thermal expansion coefficient of a second thermal deformation member constituting the second bearing.
